# EUROPEAN PATENT APPLICATION

(11) **EP 4 368 601 A1**
(43) Date of publication of application: **15.05.2024**
(21) Application number: 21969533.5
(22) Date of filing: 30.12.2021
(51) Int. Cl.: C05F 7/00, C05D 9/00, C05G 1/00, C02F 11/13, C02F 11/10, C02F 11/00

(54) **SLUDGE PEAT FERTILIZER PREPARED BY MEANS OF COMBINED ELECTRIC AND PYROLYSIS METHOD, AND METHOD THEREFOR**

(71) Applicant: Tianjin University, Tianjin 300354 (CN)
(72) Inventor: WANG, Xutong, Tianjin 300354 (CN); CHEN, Guanyi, Tianjin 300354 (CN); YAN, Beibei, Tianjin 300354 (CN); CUI, Xiaoqiang, Tianjin 300354 (CN); LI, Jian, Tianjin 300354 (CN); DAN, Zeng, Tianjin 300354 (CN); YU, Fan, Tianjin 300354 (CN); ZHI, Junao, Tianjin 300354 (CN); FANG, Cheng, Tianjin 300354 (CN); DU, Guiyue, Tianjin 300354 (CN)
(74) Representative: Patentanwälte Geyer, Fehners & Partner mbB
(86) International application number: PCT/CN2021/142893
(87) International publication number: WO 2023/123167

(57) **Abstract**

This disclosure provides a sludge-derived char as fertilizer prepared by coupling electrokinetic process with pyrolysis and a method therefor. The method comprises steps of: subjecting a sludge to drying, crushing and sieving to obtain a first sludge; placing the first sludge in a reactor containing an electrolyte, applying a first voltage to perform an electrokinetic reaction, performing drying and crushing, to obtain a second sludge; placing the second sludge in a pyrolysis reactor, and under protection of an inert gas, raising a temperature of the second sludge to a first temperature at a first heating rate, and performing a pyrolysis reaction at the first temperature to obtain the sludge-derived char as fertilizer.

## Description

### TECHNICAL FIELD

The present disclosure belongs to the fields of solid waste resource utilization and environmental protection, and specifically, relates to coupling electrokinetic process with pyrolysis for sludge-derived char as fertilizer and a method therefor.

### BACKGROUND

With the development of economy, the amount of wastewater discharge and sewage treatment facilities are increasing sharply. Although the yield of sludge is continually increasing, the current capacity for sludge treatment is seriously insufficient. The existing sludge treatment technologies, such as anaerobic digestion, incineration and other disposal technologies are relatively backward due to complex device structure, high energy consumption, and low resource utilization rate.

Sewage sludge has relatively high agricultural value because it contains a large amount of phosphorus element required by plant growth. The phosphorus content in sewage sludge is higher compared to pig manure, straw, and other biomass raw materials by 2/3 or more. However, the phosphorus in sludge primarily exists in the form of inorganic phosphorus which is difficult to be directly recovered, limiting the practical application of the sludge.

As a main by-product of wastewater treatment, the sewage sludge not only contains nutrient elements, but also comprises a large amount of toxic and harmful substances, such as heavy metals, organic pollutants (polycyclic aromatic hydrocarbons, polychlorinated biphenyls, etc.) or the like, which shows relatively strong pollution potentials. Among them, the heavy metal ions have the characteristics of being prone to enrichment and easy to migration. If not being properly disposed, the harmful substances in sludge will be released into the environment, causing pollution in water resources, soil and air, and even endangering human health. The methods for removing heavy metals from sludge comprise chemical extraction, microbial leaching, phytoremediation, and so on. The chemical methods consume a relatively large amount of reagents and have great influence on the subsequent resource utilization. The microbiological methods have strict requirements on culture conditions and are difficult to be popularized and applied on a large scale. In addition, the phytoremediation methods have problems such as a long time-consuming period.

### SUMMARY

An aspect of the disclosure provides a method for preparing a sludge-derived char as fertilizer by coupling electrokinetic process with pyrolysis, comprising steps of:
subjecting sludge to drying, crushing and sieving to obtain a first sludge;
placing the first sludge in a reactor containing an electrolyte, applying a first voltage to perform an electrokinetic reaction, performing drying and crushing, to obtain a second sludge;
placing the second sludge in a pyrolysis reactor, and under protection of an inert gas, raising a temperature of the second sludge to a first temperature at a first heating rate, and performing a pyrolysis reaction at the first temperature to obtain a third sludge.

In an embodiment of the disclosure, the step of placing the first sludge in a reactor to perform an electrokinetic reaction further comprises:
adding an inorganic salt or a biosurfactant into the reactor;
wherein the inorganic salt or the biosurfactant has a concentration in a range including 0.1~1 mol/kg.

In an embodiment of the disclosure, the inorganic salt comprises at least one of a water-soluble iron salt, an alkali metal salt and an alkaline earth metal salt;
the biosurfactant comprises any one of tea saponin, tannic acid, sodium cholate, rhamnolipid, and sophorolipid.

In an embodiment of the disclosure, the first voltage applied is in a range including 16~24 V;
the first voltage has a gradient in a range including 1~1.6 V/cm;
the electrokinetic reaction for the first sludge is performed for a first time period in a range including 120~144 hours.

In an embodiment of the disclosure, the inert gas comprises nitrogen gas, argon gas;
the first heating rate is in a range including 5-10 °C/min;
the first temperature for the pyrolysis reaction is in a range including 300~700°C;
a period for the pyrolysis reaction is in a range of 1-2 hours.

In an embodiment of the disclosure, the reactor further comprises a reserve liquid tank for accommodating circulating reserve solution and an electrode chamber.

In an embodiment of the disclosure, the electrolyte for the electrokinetic reaction comprises a potassium dihydrogen phosphate buffer solution;
the electrolyte has a concentration in a range including 0.1~1 mol/L.

In an embodiment of the disclosure, an electrode used in the electrokinetic reaction is a ruthenium-iridium-plated titanium plate.

In an embodiment of the disclosure, the sludge comprises at least one of sewage sludge, desulfurized sludge, and printing or dyeing sludge.

Another aspect of the disclosure provides a sludge-derived char as fertilizer prepared by the method according to the above embodiments.

It can be seen from the above technical solutions that the method for preparing a sludge-derived char as fertilizer by coupling electrokinetic process with pyrolysis provided in the present disclosure at least has one of the following beneficial effects:
(1) In embodiments of the present disclosure, drying the sludge may effectively remove moisture in the sludge, kill bacteria in the sludge and reduce the generation of odor. By placing the dried sludge into a reactor and performing an electrokinetic reaction under the action of an applied electric field, the conversion of heavy metal ions in the sludge from a stable state to an active state, in which the heavy metal ions are easy to migrate, is facilitated. Due to the ion exchange between the heavy metal ions and the hydroxide ions in the solution, the removal of heavy metal ions from the sludge is achieved, thereby effectively reducing the toxicity of the sludge, and further obtaining a second sludge that meets the standards for application in agriculture.
(2) In embodiments of the present disclosure, the presence form and contents of phosphorus in the sludge are also changed during the removal of heavy metal ions by the electrokinetic reaction. With the increase of inorganic phosphorus content in the sludge, the presence form of phosphorus in the sludge is converted into the forms of NaOH-P and NaHCO₃-P that are easily absorbed by plants, therefore the recovery and utilization of phosphorus in the sludge are realized. Finally, the second sludge is placed into a pyrolysis reactor, to perform carbonization by pyrolysis. Because the temperature changing during the pyrolysis reaction and the pH value of the second sludge have further influence on the phosphorus in the sludge during the process of carbonization by pyrolysis, an environmentally friendly, phosphorus-enriched, and plant-absorbable sludge-derived char as fertilizer is obtained.
(3) In embodiments of the present disclosure, an inorganic salt or a biosurfactant is added in the electrokinetic reaction. Complexes are formed due to the reaction of the inorganic salt or the biosurfactant, which further removes the heavy metal ions in the sludge effectively, thereby further reducing the biological toxicity in the sludge and the sludge-derived char as fertilizer.
(4) In embodiments of the present disclosure, by utilizing the method for preparing a sludge-derived char as fertilizer by coupling electrokinetic process with pyrolysis proposed in the present disclosure, the produced sludge-derived char as fertilizer has excellent environmental protection performance and nutrient recycling value. This method realizes the resource utilization and harmless utilization of waste, and has great industrial development potential and good prospect for market application.

### BRIEF DESCRIPTION OF THE DRAWINGS

Fig. 1 is a schematic flow chart of the method for preparing a sludge-derived char as fertilizer by coupling electrokinetic process with pyrolysis in an embodiment of the present disclosure;
Fig. 2 is a schematic diagram of the electrokinetic reaction device in an embodiment of the present disclosure;
Fig. 3 is a scanning electron microscope image showing the micromorphology of the raw sludge in Example 1 of the present disclosure;
Fig. 4 is a scanning electron microscope image showing the micromorphology of the electrokinetically treated sludge in Example 2 of the present disclosure;
Fig. 5 is a scanning electron microscope image showing the micromorphology of the sludge treated by adding magnesium chloride during the electrokinetic reaction in Example 3 of the present disclosure;
Fig. 6 is a scanning electron microscope image showing the micromorphology of the sludge treated by adding tea saponin during the electrokinetic reaction in Example 4 of the present disclosure.

### DETAILED DESCRIPTION

The embodiments of the present disclosure will be further described below with reference to the accompanying drawings.

The pyrolysis technique for sludge may realize the reduction, resource recovery and energy regeneration of sludge, which has huge environmental and economic benefits. As a main product of sludge, biochar is a porous solid material that is rich in elements that affect the plant growth, such as nitrogen, phosphorus, potassium and the like, and has huge application potential in soil fertility improvement, environmental remediation, or the like. However, since sludge contains a large amount of heavy metal ions, most of the heavy metal ions are easily enriched in the solid products during the pyrolysis process of sludge. The presence of heavy metal ions affects the application of sludge-derived char as fertilizer in agriculture. Therefore, if it is desired to use sludge-derived biochar as fertilizer as a phosphorus-enriched char fertilizer, the heavy metal ions in the sludge need to be removed to avoid potential ecological pollution risks caused by the heavy metal ions.

The electrokinetic treatment technique includes: under the action of an electric field, by the chemical reactions such as electrolysis, electromigration, electroosmosis, electrophoresis or the like, enabling the heavy metals in the sludge to convert from a stable state to a lively state, in which the heavy metal is easy to migrate, then undergoes ion exchange with hydroxide ions in the solution and migrates into the solutions at the cathode and anode, thereby achieving the removal of heavy metals. Therefore, the present disclosure specifically provides coupling electrokinetic process with pyrolysis for sludge-derived char as fertilizer and a method therefor, wherein the electrokinetic reaction is firstly used to remove heavy metal ions in sludge, and an inorganic salt or a biosurfactant, such as ferric chloride or tea saponin, is added in the electrokinetic reaction to effectively enhance the removal efficiency of heavy metal ions, thereby further reducing the biological toxicity of the sludge. At the same time, during the electrokinetic treatment of sludge, phosphorus is converted into NaOH-P and NaHCO₃-P forms, which may be easily absorbed by plants, and effectively improve the presence form of phosphorus in the sludge. The electrokinetically treated sludge is subjected to carbonization by pyrolysis. On one hand, the sludge is carbonized to obtain a char as fertilizer containing nutrient elements; on the other hand, the pyrolysis process further transforms the presence form of phosphorus in the sludge to obtain an environmentally friendly and phosphorus-enriched sludge-derived char as fertilizer, which improves the utilization of phosphorus elements in the sludge-derived char as fertilizer by plants, and thus realizes the resource utilization of the sludge-derived char as fertilizer.

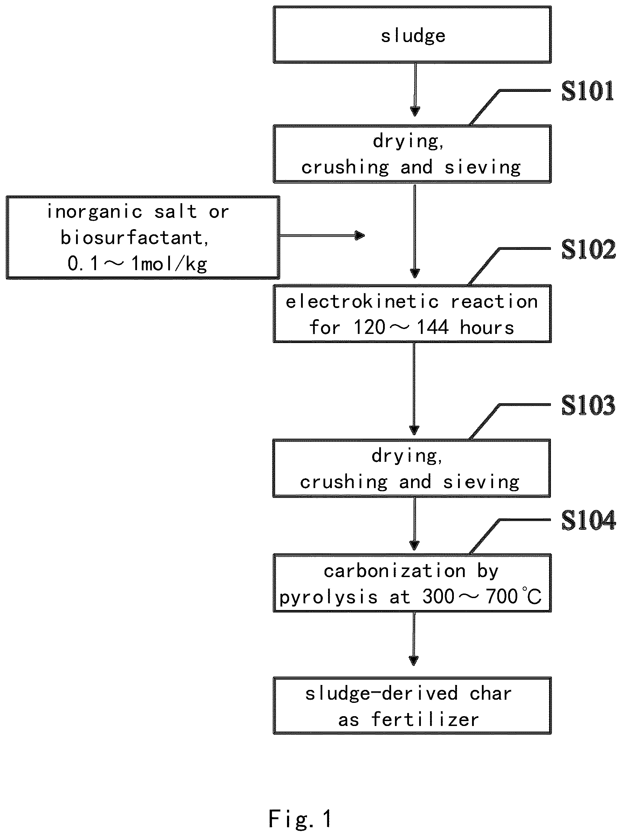

Fig. 1 is a schematic flow chart of the method for preparing a sludge-derived char as fertilizer by coupling electrokinetic process with pyrolysis in an embodiment of the present disclosure.

As shown in Fig. 1, the method for preparing a sludge-derived char as fertilizer by coupling electrokinetic process with pyrolysis comprises Step S101 to Step S104.

In Step S101, the sludge is dried, crushed and screened through a sieve to obtain a first sludge.

According to an embodiment of the present disclosure, by drying the sludge at 105°C, moisture in the sludge can be effectively removed, a part of the microorganisms in the sludge may be killed, and the odor generation during the sludge treatment process may be reduced. The sludge is crushed into particles with a particle size of 0.25 mm to keep the sludge in a homogeneous state during the electrokinetic reaction, thereby maintaining the same voltage applied to the sludge in the reaction chamber.

In Step S102, the first sludge is placed in a reactor containing electrolyte, and a first voltage is applied to perform an electrokinetic reaction for 120 to 144 hours.

According to an embodiment of the present disclosure, the first sludge is subjected to electrokinetic reaction treatment for 120 to 144 hours. Through the chemical reactions such as electrolysis, electromigration, electroosmosis and electrophoresis or the like, the heavy metal ions in the sludge can be removed, thereby reducing the biological toxicity in the sludge. In addition, the electrokinetic treatment changes the presence form of phosphorus in the sludge, and initially converts the phosphorus in the sludge into the form of NaOH-P and NaHCO₃-P that are easily absorbed by plants.

In Step S103, the electrokinetically treated sludge is dried and crushed to obtain a second sludge.

According to an embodiment of the present disclosure, the electrokinetically treated sludge is dried at 105°C to remove the excess moisture in the sludge. After crushing, the second sludge particles with a particle size of 0.25 mm are obtained, which facilitates uniform heating during the subsequent pyrolysis process.

In Step S104, the second sludge is subjected to carbonization by pyrolysis at 300 to 700°C to obtain the sludge-derived char as fertilizer.

According to an embodiment of the present disclosure, the second sludge is crushed and then put into a pyrolysis reactor, wherein the pyrolysis reactor may be a tube furnace. By performing carbonization by pyrolysis under the protection of inert gas in the temperature range of 300~700°C, the presence form of phosphorus in the electrokinetically treated sludge is further converted, which improves the recovery rate of phosphorus in the sludge, resulting in a sludge-derived char as fertilizer that may be absorbed by plants easily and is phosphorus-enriched.

According to an embodiment of the present disclosure, drying the sludge may effectively remove the moisture in the sludge, kill bacteria in the sludge and reduce the odor generation. By placing the dried sludge into a reactor and performing an electrokinetic reaction under the action of an applied electric field, the conversion of heavy metal ions in the sludge from a stable state to an active state, in which the heavy metal ions are easy to migrate, is facilitated. Due to the ion exchange between the heavy metal ions and the hydroxide ions in the solution, the removal of heavy metal ions from the sludge is achieved, thereby reducing the biological toxicity of the sludge, and further obtaining a second sludge that meets the standards for application in agriculture. At the same time, the electrokinetic treatment of sludge effectively improves the presence form and content of phosphorus in the sludge, converting phosphorus into a form that may be absorbed by plants easily. Finally, the second sludge is placed in the pyrolysis reactor for carbonization by pyrolysis. On one hand, the further purification of phosphorus and transformation of presence forms of phosphorus in the sludge are achieved; on the other hand, by using pyrolysis reaction to carbonize sludge, an environmentally friendly, phosphorus-enriched, and plant-absorbable sludge-derived char as fertilizer is achieved, which realizes the application of the sludge-derived char as fertilizer prepared from sludge in agriculture.

According to an embodiment of the present disclosure, in Step S102, placing the first sludge in a reactor to perform an electrokinetic reaction further comprises: adding an inorganic salt or a biosurfactant into the reactor.

According to an embodiment of the present disclosure, before performing the electrokinetic reaction, the first sludge and deionized water are added into the reaction chamber in a ratio of 1:3 to ensure the same reaction conditions for each experiment. At the same time, the liquid level of the electrolyte is adjusted to be the same as the liquid level of the first sludge to ensure the normal ion migration in the solution.

According to an embodiment of the present disclosure, during the reaction process of electrokinetically treating the sludge, the added inorganic salt or biosurfactant may form a complex with heavy metal ions, thereby improving the removal efficiency of the heavy metal ions in the sludge, thereby further reducing the biological toxicity in the sludge.

According to an embodiment of the present disclosure, the concentration of the inorganic salt or the biosurfactant added to the first sludge is in a range including 0.1~1 mol/kg, optionally 0.1, 0.2, 0.5, 0.6, 0.8, 1.0 mol/kg.

According to an embodiment of the present disclosure, the concentration of the inorganic salt or the biosurfactant is limited to 0.1~1 mol/kg, which may maintain certain moisture content of the sludge and prevent the electrokinetic reaction from proceeding in-normally due to the excessive current in the solution.

According to an embodiment of the present disclosure, the inorganic salt comprises at least one of a water-soluble iron salt, an alkali metal salt and an alkaline earth metal salt.

According to an embodiment of the present disclosure, the inorganic salt comprises at least one of FeCl₃, MgCl₂, CaCl₂, and NaNO₃.

According to an embodiment of the present disclosure, the biosurfactant comprises any one of tea saponin, tannic acid, sodium cholate, rhamnolipid, and sophorolipid.

According to an embodiment of the present disclosure, the first voltage applied is in the range including 16 to 24 V, where the voltage may be selected from 16, 18, 20, 22, and 24 V

According to an embodiment of the present disclosure, the gradient of the first voltage is in the range including 1, 1.2, 1.4, and 1.6 V/cm.

According to an embodiment of the present disclosure, since the sludge itself comprises a certain resistance, and based on the working conditions of subsequent addition of an inorganic salt or a biosurfactant and the consideration of the resistance in the solution, the voltage needs to be controlled at 16-24 V to ensure that the gradient of the voltage is within a range of 1~1.6 V/cm, so that the electrokinetic reaction may proceed normally.

According to an embodiment of the present disclosure, the electrokinetic reaction for the first sludge is performed for a time in a range including 120, 124, 128, 130, 138, 140, 144 hours or the like.

According to an embodiment of the present disclosure, the first sludge is subjected to sufficient electrokinetic reaction to effectively remove the heavy metal ions in the sludge. However, when the time of electrokinetically treating the sludge is extended, the heavy metal ions in the sludge are not significantly removed. Therefore, 120 hours is preferred from an economic point of view.

According to an embodiment of the present disclosure, in Step S104, the inert gas for carbonization by pyrolysis comprises any one of nitrogen gas or argon gas

According to an embodiment of the present disclosure, the first heating rate of the pyrolysis reaction is in a range including 5-10 °C/min, and may be selected from 5, 6, 7, 8, 9, 10 °C/min, or the like.

According to an embodiment of the present disclosure, the first temperature for he pyrolysis reaction is in a range including 300~700°C, and optionally 300, 350, 400, 450, 500, 550, 600, 650, 700°C, or the like.

According to an embodiment of the present disclosure, the time for the pyrolysis reaction is in a range including 1-2 hours, optionally 1, 1.5, 2 hours, or the like.

According to an embodiment of the present disclosure, by placing the crushed second sludge in the pyrolysis reactor, raising the temperature to 300~700°C at a heating rate of 5-10 °C/min and pyrolyzing it at this temperature for 1-2 hours, the presence form of phosphorus in the sludge may be further changed, which allows the char fertilizer and the phosphate fertilizer in the sludge to exist in stable forms, thereby improving the recovery and utilization rate of phosphorus in the sludge.

According to an embodiment of the present disclosure, the reactor further comprises a reserve liquid tank for accommodating a circulating reserve solution and an electrode chamber.

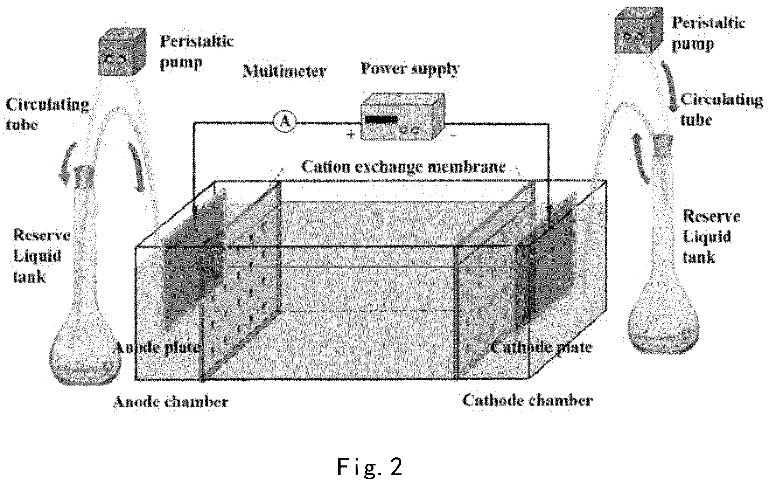

Fig. 2 is a schematic diagram of the electrokinetic reaction device in an embodiment of the present disclosure.

As shown in Fig. 2, the reactor comprises a reaction chamber. Two electrode chambers are provided at both sides of the reaction chamber. The two electrode chambers are respectively connected to a circulating reserve liquid tank. The reserve liquid tank is connected through a peristaltic pump and introduces a potassium dihydrogen phosphate solution into the electrode chambers to ensure pH stability in the electrode chamber and the reaction chamber. The reaction chamber and the electrode chamber are connected by a flange and separated by a cation membrane placed between the electrode chamber and the reaction chamber to prevent the sludge from entering the electrode chamber. A magnetic stirrer is connected to the reaction chamber. The magnetic stirrer is set to stir at a speed of 200~400 r/min to ensure that the sludge in the reaction chamber is in a uniform state. An electrode is inserted into each of the electrode chambers respectively, and the electrodes are connected to a DC power supply through wires.

According to an embodiment of the present disclosure, due to the production of H⁺ and OH⁻ from decomposition of water during the electrokinetic reaction, OH⁻ will migrate and react with the heavy metals in the solution, which changes the pH value in the solution. By introducing the circulating reserve solution of a potassium dihydrogen phosphate buffer solution into the reaction electrode chamber, excessive heavy metal precipitation in the sludge may be avoided, the pH value of the solution may be stabilized at a certain value, and the solution in the reaction chamber may be kept fresh.

According to an embodiment of the present disclosure, the electrolyte solution for the electrokinetic reaction comprises a potassium dihydrogen phosphate buffer solution;

The concentration of the electrolyte is in the range including 0.1~1 mol/L, and optionally 0.1, 0.3, 0.5, 0.7, 0.9, 1.0 mol/L, and the like.

According to an embodiment of the present disclosure, the electrode used in the electrokinetic reaction is a ruthenium-iridium-plated titanium plate.

According to an embodiment of the present disclosure, the ruthenium-iridium-plated titanium plate is selected because its chemical properties are stable and it is not easy to react with the heavy metal ions or metal oxides to produce complexes. In addition, the ruthenium-iridium-plated titanium plate itself has good electrical conductivity and may be recycled for a long time.

According to an embodiment of the present disclosure, the sludge comprises at least one of sewage sludge, desulfurized sludge, and printing or dyeing sludge.

In order to make the purpose, technical solutions and advantages of the present disclosure clearer, the present disclosure is illustrated below in conjunction with examples. The illustrated examples are only used to explain the present disclosure and are not intended to limit the scope of the present disclosure.

In the examples of the present disclosure, the content of the heavy metals was determined by using the HNO₃-HF-HClO₄ acid digestion method for digestion and detected by using an ICP-MS equipment. The phosphorus content was determined by using the H₂O-NaHCO₃-NaOH-HCl sequential extraction method, the phosphorus molybdenum blue colorimetric method and an ultraviolet spectrophotometer for measurement. The forms of phosphorus mainly include solid phase total phosphorus, inorganic phosphorus and organic phosphorus, as well as water-soluble phosphorus (H₂O-P), NaHCO₃-soluble phosphorus (NaHCO₃-P), NaOH-soluble phosphorus (NaOH-P), HCl-soluble phosphorus (HCl-P), phosphorus in the residue (residue-P).

### Example 1

A residual sludge from a wastewater treatment plant was dried at 105°C (about 400 g) to remove the moisture in the sludge and kill some bacteria. The sludge was crushed with a pulverizer to a particle size of 0.25 mm to obtain a raw sludge. The crushed raw sludge was put into a tube furnace, which was then introduced with an inert gas, heated to 400°C at a heating rate of 5 °C/min and kept at this temperature for 2 hours for performing reaction. The product was cooled, taken out from the tube furnace, dried and crushed to obtain a raw sludge-derived char as fertilizer.

According to the test, in the raw sludge, the phosphorus content was 16.17 mg/g, the inorganic phosphorus content was 9.54 mg/g, and the organic phosphorus content was 6.64 mg/g; and in the raw sludge-derived char as fertilizer, the phosphorus content was 29.94 mg/g, the inorganic phosphorus content was 27.65 mg/g, and the organic phosphorus content was 2.29 mg/g.

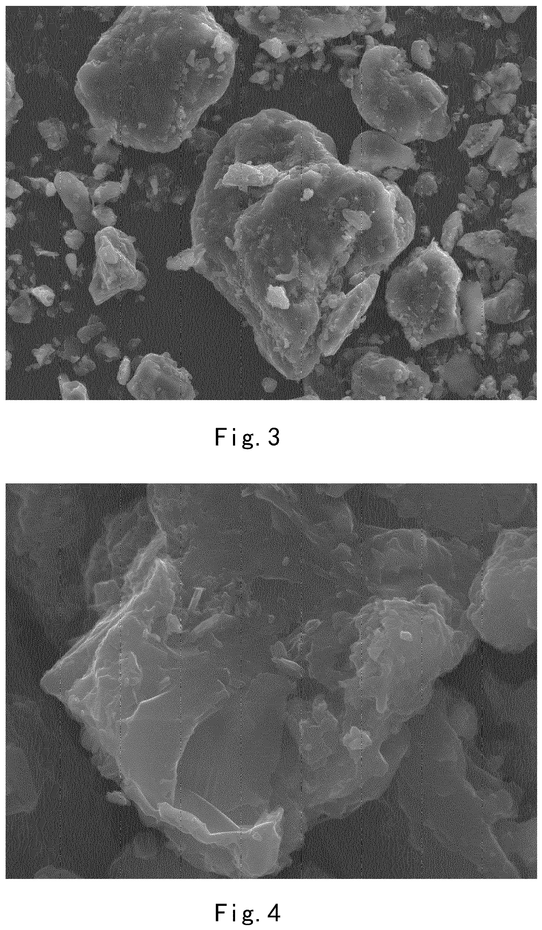

Fig. 3 is a scanning electron microscope image showing the micromorphology of the raw sludge in Example 1 of the present disclosure.

As shown in Figure 3, the raw sludge without electrokinetic treatment has a relatively small specific surface area and relatively large pore size.

### Example 2

A residual sludge from a wastewater treatment plant was dried at 105°C (about 400 g) to remove the moisture in the sludge and kill some bacteria. The sludge was crushed with a pulverizer to a particle size of 0.25 mm, which obtained a first sludge, in order to keep the sludge in a homogeneous state during the electrokinetic reaction, and the voltage applied to the sludge in the reaction chamber was maintained to be consistence. A mixture comprising sludge : water = 1:3 was added into a reaction chamber, and the conditions were controlled to be the same for each experiment. A 0.1 mol/L potassium dihydrogen phosphate buffer solution was added into the electrode chamber of the electrokinetic reactor, wherein the liquid level of the buffer solution was controlled to be equal to the liquid level of the first sludge. The experimental parameters of the electrokinetic reaction were set as follows: the DC power supply voltage was 24 V, the voltage gradient was 1.6 V/cm, and the rotation speed of the magnetic stirrer was 300 r/min. A 0.1 mol/L potassium dihydrogen phosphate buffer solution was added to the reaction chamber as a stock solution, which was replaced every 24 hours. The flow rate of the peristaltic pump was set to be 3-5 mL/min. After 120 hours, the sludge was dried at 105°C, ground and screened to obtain a second sludge. The crushed second sludge was put into a tube furnace, which was then introduced with an inert gas, heated to 400°C at a heating rate of 5 °C/min and kept at this temperature for 2 hours for performing reaction. The product was cooled, taken out from the tube furnace, dried and crushed to obtain a sludge-derived char as fertilizer.

According to the test, after the electrokinetic treatment alone, the pH value of the sludge was 3.9, and in the second sludge, the phosphorus content was 17.87 mg/g, the inorganic phosphorus content was 12.75 mg/g, and the organic phosphorus content was 5.12 mg/g. Regarding the sludge-derived char as fertilizer prepared by the pyrolysis process after the electrokinetic treatment of the sludge, the pH was 5.88, the carbon content was 48.02%, the nitrogen content was 4.08%, the phosphorus content was 30.87 mg/g, the inorganic phosphorus content was 22.06 mg/g, and the organic phosphorus content was 8.82 mg/g.

Fig. 4 is a scanning electron microscope image showing the micromorphology of the electrokinetically treated sludge in Example 2 of the present disclosure.

As shown in Figure 4, compared with the pore size of the raw sludge (Example 1), the pore size of the sludge after electrokinetic treatment is slightly increased, and the pores are increased.

### Example 3

A residual sludge from a wastewater treatment plant was dried at 105°C (about 400 g) to remove the moisture in the sludge and kill some bacteria. The sludge was crushed with a pulverizer to a particle size of 0.25 mm to obtain a first sludge. The sludge was kept in a homogeneous state during the electrokinetic reaction, and the voltage applied to the sludge in the reaction chamber was kept to be consistence. A mixture comprising sludge : water = 1:3 and 0.1 mol/kg of an inorganic salt magnesium chloride (MgCl₂) was added into a reaction chamber, and the conditions were controlled to be the same for each experiment. A 0.1 mol/L potassium dihydrogen phosphate buffer solution was added into the electrode chamber of the electrokinetic reactor, wherein the liquid level of the electrolyte was controlled to be equal to the liquid level of the first sludge. The experimental parameters of the electrokinetic reaction were set as follows: the DC power supply voltage was 24 V, the voltage gradient was 1.6 V/cm, and the rotation speed of the magnetic stirrer was 300 r/min. A 0.1 mol/L potassium dihydrogen phosphate buffer solution was added to the reaction cell as a stock solution, which was refreshed every 24 hours. The flow rate of the peristaltic pump was set to be 3-5 mL/min. After 120 hours, the sludge was dried at 105°C, ground and screened to obtain a second sludge. The crushed second sludge was put into a tube furnace, which was then introduced with an inert gas, heated to 400°C at a heating rate of 5 °C/min and kept at this temperature for 2 hours for performing reaction. The product was cooled, taken out from the tube furnace, dried and crushed to obtain a sludge-derived char as fertilizer.

According to the test, in the process of adding an inorganic salt magnesium chloride during the electrokinetic treatment, the pH value of the sludge was 2.7, and in the second sludge, the phosphorus content was 17.99 mg/g, the inorganic phosphorus content was 12.84 mg/g, and the organic phosphorus content was 5.16 mg/g. Regarding the sludge-derived char as fertilizer prepared by the pyrolysis process after the electrokinetic treatment of the sludge wherein an inorganic salt magnesium chloride was added, the pH value was 3.81, the carbon content was 49.21%, the nitrogen content was 4.33%, the phosphorus content was 31.42 mg/g, the inorganic phosphorus content was 23.31 mg/g, and the organic phosphorus content was 8.1 mg/g.

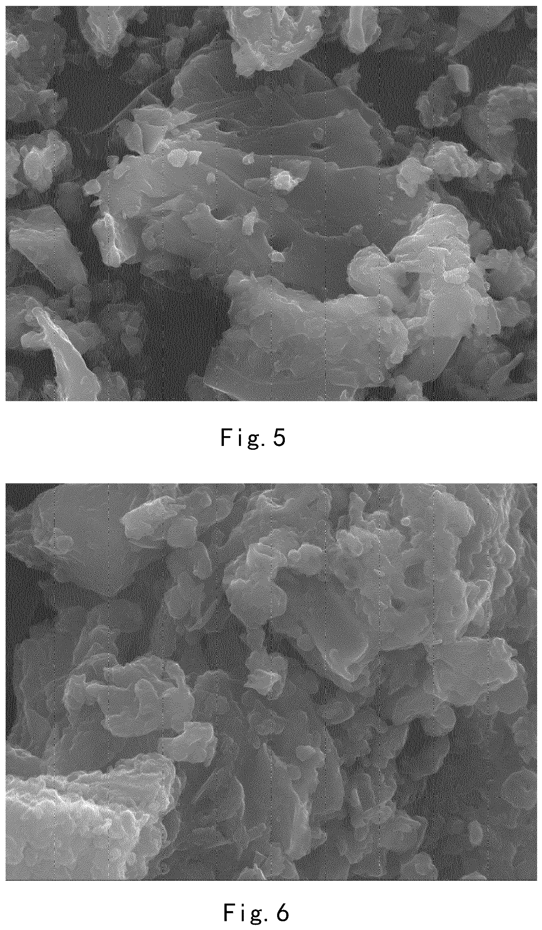

Fig. 5 is a scanning electron microscope image showing the micromorphology of the sludge treated by adding magnesium chloride during the electrokinetic reaction in Example 3 of the present disclosure.

As shown in Fig. 5, compared with the sludge in Example 2, the sludge prepared after electrokinetic treatment with added inorganic salt magnesium chloride has reduced pores and specific surface area, but these pores and specific surface area are still larger than those of the raw sludge. The reason is that a part of magnesium chloride adhered to the surface of the sludge.

### Example 4

A residual sludge from a wastewater treatment plant was dried at 105°C (about 400 g) to remove the moisture in the sludge and kill some bacteria. The sludge was crushed with a pulverizer to a particle size of 0.25 mm to obtain a first sludge. The sludge was kept in a homogeneous state during the electrokinetic reaction, and the voltage applied to the sludge in the reaction chamber was kept to be consistence. A mixture comprising sludge : water = 1:3 and 0.1 mol/kg of a biosurfactant tea saponin (C₃₀H₆O₆) was added into a reaction chamber, and the conditions were controlled to be the same for each experiment. A 0.1 mol/L potassium dihydrogen phosphate buffer solution was added into the electrode cell of the electrokinetic reactor, wherein the liquid level of the buffer solution was controlled to be equal to the liquid level of the first sludge. The experimental parameters of the electrokinetic reaction were set as follows: the DC power supply voltage was 24 V, the voltage gradient was 1.6 V/cm, and the rotation speed of the magnetic stirrer was 300 r/min. A 0.1 mol/L potassium dihydrogen phosphate buffer solution was added as a stock solution, which was replaced every 24 hours. The flow rate of the peristaltic pump was set to be 3-5 mL/min. After 120 hours, the sludge was dried at 105°C, ground and screened to obtain a second sludge. The crushed second sludge was put into a tube furnace, which was then introduced with an inert gas, heated to 400°C at a heating rate of 5 °C/min and kept at this high temperature for 2 hours for performing reaction. The product was cooled, taken out from the tube furnace, dried and crushed to obtain a sludge-derived char as fertilizer.

According to the test, in the process of adding a biosurfactant tea saponin during the electrokinetic treatment, the pH value of the sludge was 3.67, and in the second sludge, the phosphorus content was 19.12 mg/g, the inorganic phosphorus content was 14.56 mg/g, and the organic phosphorus content was 4.55 mg/g. Regarding the sludge-derived char as fertilizer prepared by the pyrolysis process after the electrokinetic treatment of the sludge wherein a biosurfactant tea saponin was added, the pH value was 6.44, the carbon content was 48.78%, the nitrogen content was 3.89%, the phosphorus content was 33.46 mg/g, the inorganic phosphorus content was 22.38 mg/g, and the organic phosphorus content was 11.08 mg/g.

Fig. 6 is a scanning electron microscope image showing the micromorphology of the sludge treated by adding tea saponin during the electrokinetic reaction in Example 4 of the present disclosure.

As shown in Figure 6, compared with the sludge in Example 2, the sludge prepared after electrokinetic treatment with added biosurfactant tea saponin has reduced pores and slightly reduced specific surface area. The reason is that a part of the tea saponin adhered to the surface of the sludge. The pore size and specific surface area of the sludge prepared after electrokinetic treatment with added biosurfactant tea saponin are not significantly different from those of the sludge prepared after electrokinetic treatment with added inorganic salt magnesium chloride, but these pores and specific surface area are still larger than those of the raw sludge.

**Table 1. The physical and chemical properties and the apparent structural changes of the sludge-derived char as fertilizers prepared before and after electrokinetic treatment of sludge**

| No. | Yield (%) | Ash Content (%) | pH | Specific Surface Area (m²/g) | Pore Volume (cc/g) | Pore Size (nm) |
|---|---|---|---|---|---|---|
| Example 1 | 55.10 | 59.89 | 7.50 | 9.82 | 0.03 | 61.27 |
| Example 2 | 58.54 | 60.27 | 5.88 | 24.51 | 0.07 | 56.82 |
| Example 3 | 59.16 | 58.89 | 3.81 | 23.76 | 0.07 | 58.22 |
| Example 4 | 67.42 | 62.90 | 6.44 | 22.42 | 0.05 | 46.86 |

As can be seen from Table 1, by comparing the char as fertilizer prepared from the sludge treated by electrokinetic reaction with the char as fertilizer prepared from the sludge not treated by electrokinetic reaction, it is found that there is no obvious difference between their ash contents, which indicates that the inorganic ingredients in the char as fertilizer prepared from the electrokinetically treated sludge have not changed and there is no loss of inorganic matter. After electrokinetic reparation, the pH value of the sludge is significantly reduced, but its main compound components remain unchanged, among which SiO₂ and MgO or the like are reduced by 1.5-4%. The char as fertilizer prepared from the sludge without electrokinetic treatment (Example 1) has a smaller specific surface area of 9.82 m²/g and a larger pore size; on the other hand, the char as fertilizers prepared from the electrokinetically treated sludge (Examples 2 to 4) all have significantly increased specific surface area and smaller pore size. The specific surface area of the sludge-derived char as fertilizer prepared from the electrokinetically treated sludge is increased by 2.50-2.28 times compared with the raw sludge-derived char as fertilizer (Examples 2 to 4). The specific surface area of the sludge-derived char as fertilizer prepared by adding an inorganic salt magnesium chloride or a biosurfactant tea saponin in electrokinetic treatment (Examples 3 and 4) is slightly lower than the specific surface area of the sludge-derived char as fertilizer prepared by electrokinetic treatment only (Example 2). The reason is that the added magnesium chloride or tea saponin adhered to the surface of the sludge-derived char as fertilizer, resulting in a decrease in the specific surface area.

**Table 2. Effect of the electrokinetic reaction on the heavy metal removal from the sludge**

| Removal Rate | Ni (%) | Cu (%) | Zn (%) | Cd (%) | Pb (%) |
|---|---|---|---|---|---|
| Example 2 | 55.31 | 57.22 | 57.21 | 55.28 | 60.16 |
| Example 3 | 63.15 | 59.66 | 73.76 | 60.52 | 62.74 |
| Example 4 | 59.78 | 60.72 | 60.56 | 59.20 | 64.24 |

It can be seen from Table 2 that after electrokinetic treatment alone, the removal rates of the heavy metal elements Ni, Cu, Zn, Cd, and Pb in the second sludge are 55.31%, 57.22%, 57.21%, 55.28, and 60.16% respectively. After adding an inorganic salt magnesium chloride during the electrokinetic treatment, the removal rates of heavy metals in the second sludge increase by an average of 4.29%. After adding a biosurfactant tea saponin during the electrokinetic treatment process, the removal rates of heavy metals in the second sludge increase by an average of 2.39%. Each element after the electrokinetic treatment is far lower than the standard of Class A in "Soil environmental quality Risk control standard for soil contamination of agricultural land" (GB15618-2018).

**Table 3. Experiments on toxicity characteristic leaching procedure (TCLP) contents from the sludge-derived char as fertilizers**

| TCLP-derived leachable contents of heavy metals | Zn (µg/L) | As (µg/L) |
|---|---|---|
| Example 1 | 2440.17 | 59.17 |
| Example 2 | 1009.80 | 40.01 |
| Example 3 | 165.16 | 24.86 |
| Example 4 | 854.77 | 22.43 |

It can be seen from Table 3 that compared with the sludge-derived char as fertilizer prepared from the raw sludge, the toxic leaching amount of heavy metal of the sludge-derived char as fertilizer prepared from the sludge subjected to electrokinetic treatment alone is reduced by 58.61% (for Zn element) and 32.38% (for As element). The toxic leaching amount of heavy metal of the sludge-derived char as fertilizer prepared from the sludge obtained by adding magnesium chloride inorganic salt during the electrokinetic treatment process was reduced by 93.23% (Zn) and 57.98% (As), which indicates that the added inorganic salt forms a complex with the heavy metal ions to improve the removal rate of heavy metal ions, thereby reducing the biotoxicity in the sludge. The toxic leaching amount of heavy metal of the sludge-derived char as fertilizer prepared from the sludge obtained by adding a biosurfactant tea saponin during the electrokinetic treatment process was reduced by 64.97% (Zn) and 62.09% (As), which indicates that the biosurfactant may also improve the removal rates of heavy metals. The toxicity of the sludge-derived char as fertilizer prepared from the sludge subjected to electrokinetic treatment and the toxicity of the sludge-derived char as fertilizers prepared from the sludge obtained by adding an inorganic salt or a biosurfactant during the electrokinetic treatment process are far lower than the standards of the US Environmental Protection Agency.

**Table 4. Changes in phosphorus contents in the sludge before and after electrokinetic treatment and the sludge-derived char as fertilizers**

| No. | Total Phosphorus Content (mg/g) | Inorganic Phosphorus Content (mg/g) | Organic Phosphorus Content (mg/g) |
|---|---|---|---|
| Raw Sludge in Example 1 | 16.17 | 9.54 | 6.64 |
| Sludge in Example 2 | 17.87 | 12.75 | 5.12 |
| Sludge in Example 3 | 17.99 | 12.84 | 5.16 |
| Sludge in Example 4 | 19.12 | 14.56 | 4.55 |
| Raw Sludge-derived char as fertilizer in Example 1 | 29.94 | 27.65 | 2.29 |
| Sludge-derived char as fertilizer in Example 2 | 30.87 | 22.06 | 8.82 |
| Sludge-derived char as fertilizer in Example 3 | 31.42 | 23.31 | 8.10 |
| Sludge-derived char as fertilizer in Example 4 | 33.46 | 22.38 | 11.08 |

It can be seen from Table 4 that the total phosphorus content in the sludge before and after electrokinetic treatment remained basically unchanged and increased slightly. The reason for the increase may be that during the electrokinetic treatment process and during the ion exchange reaction between the electrolyte and the sludge, some phosphorus migrates into the sludge, thereby increasing the phosphorus content. Compared with the raw sludge, the inorganic phosphorus content in the sludge obtained only with electrokinetic treatment increases by 33.72%. Compared with the raw sludge, the inorganic phosphorus content in the sludge obtained by adding magnesium chloride during the electrokinetic treatment process is increased by 34.6%. Compared with the raw sludge, the inorganic phosphorus content in the sludge obtained by adding tea saponin during the electrokinetic treatment process is increased by 34.6%, but the organic phosphorus content decreased slightly.

After carbonization by pyrolysis of the sludge, the phosphorus content in the raw sludge-derived char as fertilizer is relatively high. However, since the raw sludge comprises heavy metal ions, it cannot be used as an agricultural fertilizer. The phosphorus content in the sludge-derived char as fertilizer prepared by coupling electrokinetic process with pyrolysis is greater than those of the raw sludge-derived char as fertilizer and the electrokinetic treated sludge, and the heavy metal content in the electrokinetically treated sludge-derived char as fertilizer is far lower than the standards of the US Environmental Protection Agency, so it may be used as an agricultural fertilizer.

**Table 5. Distribution of different phosphorus forms in the sludge before and after electrokinetic treatment and the sludge-derived char as fertilizers**

| No. | H₂O-P (mg/g) | NaHCO₃-P (mg/g) | NaOH-P (mg/g) | HCl-P (mg/g) | Residue-P (mg/g) |
|---|---|---|---|---|---|
| Raw Sludge in Example 1 | 6.17 | 2.25 | 2.83 | 1.05 | 3.87 |
| Sludge in Example 2 | 5.76 | 2.63 | 5.05 | 0.22 | 3.22 |
| Sludge in Example 3 | 7.20 | 3.08 | 6.41 | 0.16 | 0.01 |
| Sludge in Example 4 | 6.06 | 2.29 | 10.48 | 0.32 | 1.28 |
| Raw Sludge-derived char as fertilizer in Example 1 | 0.38 | 1.49 | 3.90 | 20.85 | 3.32 |
| Sludge-derived char as fertilizer in Example 2 | 0.20 | 0.90 | 9.16 | 5.08 | 13.60 |
| Sludge-derived char as fertilizer in Example 3 | 1.18 | 1.49 | 15.78 | 5.42 | 8.07 |
| Sludge-derived char as fertilizer in Example 4 | 0.12 | 1.05 | 4.83 | 8.45 | 18.14 |

It can be seen from Table 5 that the forms and contents of phosphorus in the sludge and sludge-derived char as fertilizers changed. Before the carbonization by pyrolysis, the main form in the sludge is H₂O-P. However, this H₂O-P is easily absorbed by water, resulting in the loss of phosphorus. After the carbonization by pyrolysis, the H₂O-P content in the sludge-derived char as fertilizer is significantly reduced, which effectively prevents phosphorus from being massively enriched in the water and the soil environment, thereby reducing the loss of phosphorus. NaHCO₃-P and NaOH-P are the phosphorus forms that are easily absorbed by plants, while the HCl-P and the residue-P are used for other purposes. Compared with the raw sludge, the NaHCO₃-P and NaOH-P in the sludge obtained by electrokinetic treatment increased to a certain extent, among which NaOH-P increased significantly. Compared with the raw sludge-derived char, the NaHCO₃-P and NaOH-P contained in the char as fertilizer prepared by pyrolysis of the electrokinetically treated sludge are increased, wherein the increase of NaOH-P is more significant, which indicates that the pyrolysis process may further promote the transformation of the presence forms of phosphorus in the sludge.

It can also be seen from Table 5 that the NaOH-P content in the sludge-derived char as fertilizer in Example 2 is 3.2 times that of the raw sludge (Example 1), which increased by 37.81% compared with the raw sludge-derived char as fertilizer. The NaOH-P content of the sludge-derived char as fertilizer in Example 3 is 5.57 times that of the raw sludge, which is increased by 72.27% compared to Example 2. The sludge-derived char as fertilizer in Example 3 increased by 37.81% compared with the raw sludge-derived char as fertilizer. The content of NaOH-P in the sludge of Example 4 is 3.7 times of that content in the raw sludge, and the sludge-derived char as fertilizer in Example 4 is slightly higher than the raw sludge-derived char as fertilizer. This indicates that while the heavy metals in the sludge are removed by electrokinetic process, the presence form of phosphorus in the sludge is changed, and the pyrolysis reaction may further promote the change of the form of phosphorus in the sludge and improve the recovery rate of available phosphorus elements in the sludge, thereby realizing the resource utilization of the sludge.

### Example 5

The preparation method of Example 5 was the same as that of Example 1, and the only difference is that the temperature of pyrolysis carbonization for the raw sludge was 300°C.

### Example 6

The preparation method of Example 6 was the same as that of Example 1, and the only difference is that the temperature of pyrolysis carbonization for the raw sludge was 500°C.

### Example 7

The preparation method of Example 7 was the same as that of Example 1, and the only difference is that the temperature of pyrolysis carbonization for the raw sludge was 600°C.

### Example 8

The preparation method of Example 8 was the same as that of Example 1, and the only difference is that the temperature of pyrolysis carbonization for the raw sludge was 700°C.

### Example 9

The preparation method of Example 9 was the same as that of Example 4, and the only difference is that the temperature of pyrolysis carbonization for the second sludge was 300°C.

### Example 10

The preparation method of Example 10 was the same as that of Example 4, and the only difference is that the temperature of pyrolysis carbonization for the second sludge was 500°C.

### Example 11

The preparation method of Example 11 was the same as that of Example 4, and the only difference is that the temperature of pyrolysis carbonization for the second sludge was 600°C.

### Example 12

The preparation method of Example 12 was the same as that of Example 4, and the only difference is that the temperature of pyrolysis carbonization for the second sludge was 700°C.

**Table 6. Effect of different pyrolysis temperatures on the carbonization of the raw sludge and the effect of adding tea saponin during the electrokinetic reaction on the carbonization of the sludge**

| No. | H₂O-P (mg/g) | NaHCO₃-P (mg/g) | NaOH-P (mg/g) | HCl-P (mg/g) | Residue-P (mg/g) |
|---|---|---|---|---|---|
| Example 5 | 0.74 | 1.77 | 3.48 | 13.45 | 3.41 |
| Example 1 | 0.38 | 1.49 | 3.90 | 20.85 | 3.32 |
| Example 6 | 0.17 | 0.97 | 1.15 | 24.92 | 5.91 |
| Example 7 | 0.09 | 0.52 | 8.71 | 22.78 | 1.29 |
| Example 8 | 0.07 | 0.33 | 8.62 | 23.03 | 3.00 |
| Example 9 | 0.22 | 1.85 | 3.83 | 2.90 | 15.69 |
| Example 4 | 0.12 | 1.05 | 4.83 | 8.45 | 18.14 |
| Example 10 | 0.07 | 0.63 | 8.04 | 12.01 | 11.58 |
| Example 11 | 0.06 | 0.21 | 9.91 | 15.00 | 7.70 |
| Example 12 | 0.04 | 0.08 | 9.78 | 17.95 | 6.97 |

It can be seen from Table 6 that when the raw sludge was pyrolyzed at a temperature of 600°C (Example 7), the sludge-derived char as fertilizer prepared has a high phosphorus content and the phosphorus form may be the form that can be absorbed by plants easily. However, the presence of heavy metal ions in the sludge affects its practical application in agriculture. When the sludge prepared in the electrokinetic reaction with the biological additive tea saponin is pyrolyzed at a temperature of 600°C (Example 11), the prepared sludge-derived char as fertilizer has a high phosphorus content and the phosphorus exists in the form of NaHCO₃-P and NaOH-P that are easily absorbed by plants, realizing the resource utilization of phosphorus.

The above-mentioned specific embodiments of the present disclosure do not constitute a limitation on the scope of the present disclosure. Any other corresponding changes and deformations made based on the technical concept of the present disclosure shall be included in the protection scope of the claims of the present disclosure.

## Claims

1. A method for preparing a sludge-derived char as fertilizer by coupling electrokinetic process with pyrolysis, comprising steps of:
subjecting sludge to drying, crushing and sieving to obtain a first sludge;
placing the first sludge in a reactor containing an electrolyte, applying a first voltage to perform an electrokinetic reaction, performing drying and crushing, to obtain a second sludge;
placing the second sludge in a pyrolysis reactor, and under protection of an inert gas, raising a temperature of the second sludge to a first temperature at a first heating rate, and performing a pyrolysis reaction at the first temperature to obtain the sludge-derived char as fertilizer.

2. The method according to claim 1, wherein the step of placing the first sludge in a reactor to perform an electrokinetic reaction further comprises:
adding an inorganic salt or a biosurfactant into the reactor;
wherein the inorganic salt or the biosurfactant has a concentration in a range including 0.1~1 mol/kg.

3. The method according to claim 2, wherein the inorganic salt comprises at least one of a water-soluble iron salt, an alkali metal salt and an alkaline earth metal salt;
the biosurfactant comprises any one of tea saponin, tannic acid, sodium cholate, rhamnolipid, and sophorolipid.

4. The method according to claim 1, wherein the first voltage applied is in a range including 16~24 V;
the first voltage has a gradient in a range including 1~1.6 V/cm;
the electrokinetic reaction for the first sludge is performed for a first time period in a range including 120~144 hours.

5. The method according to claim 1, wherein the inert gas comprises any one of nitrogen gas or argon gas;
the first heating rate is in a range including 5~10 °C/min;
the first temperature for the pyrolysis reaction is in a range including 300~700°C;
a time period for the pyrolysis reaction is in a range including 1-2 hours.

6. The method according to claim 1, wherein the reactor further comprises reserve liquid tank for accommodating circulating reserve solution and an electrode chamber.

7. The method according to claim 1, wherein the electrolyte for the electrokinetic reaction comprises a potassium dihydrogen phosphate buffer solution;
the electrolyte has a concentration in a range including 0.1~1 mol/L.

8. The method according to claim 1, wherein an electrode used in the electrokinetic reaction is a ruthenium-iridium-plated titanium plate.

9. The method according to claim 1, wherein the sludge comprises at least one of sewage sludge, desulfurized sludge, and printing or dyeing sludge.

10. A sludge-derived char as fertilizer prepared by using the method according to any one of claims 1-9.
